# FASCICULE DE BREVET EUROPEEN

(11) **EP 0 950 303 B1**
(45) Date de publication et mention de la délivrance du brevet: **25.01.2006**
(21) Numéro de dépôt: 97942087.4
(22) Date de dépôt: 25.09.1997
(51) Int. Cl.: H04L 9/32, H04M 1/274

(54) **PROCEDE ET SYSTEME POUR SECURISER LES PRESTATIONS DE SERVICE A DISTANCE DES ORGANISMES FINANCIERS**
VERFAHREN UND EINRICHTUNG ZUR SICHERUNG DER FERNDIENSTLEISTUNGEN DER FINANZINSTITUTE
METHOD AND SYSTEM FOR ENSURING THE SECURITY OF THE REMOTE SUPPLY OF SERVICES OF FINANCIAL INSTITUTIONS

(30) Priorité: 25.09.1996 FR 9611915
(43) Date de publication de la demande: 20.10.1999
(73) Titulaire: Audiosmartcard International S.A., 92100 Boulogne Billancourt (FR)
(72) Inventeur: ROSSET, Franck, F-75011 Paris (FR); GAYET, Alain, F-92400 Courbevoie (FR); MOULIN, Jean, F-92210 Draveil (FR)
(74) Mandataire: Vidon, Patrice
(86) Numéro de dépôt international: PCT/FR1997/001682
(87) Numéro de publication internationale: WO 1998/013971

(56) Documents cités:
- EP-A- 0 423 035
- EP-A- 0 459 781
- CA-A- 2 085 775
- DE-A- 4 325 459
- FR-A- 2 701 181
- GB-A- 2 274 523

## Description

Le domaine de l'invention est celui des prestations de services à distance proposées par les organismes financiers, tels que les banques et/ou les compagnies d'assurances, à leurs clients.

Plus précisément l'invention concerne un procédé et un système permettant aux clients d'une banque ou d'une compagnie d'assurance, située à distance, d'accéder de manière sûre et rapide, au moyen d'un microphone relié à un réseau de communication, aux services que ladite banque ou ladite compagnie d'assurance offre à ses clients.

Le problème posé est d'empêcher un utilisateur mal intentionné d'accéder aux services offerts par la banque ou la compagnie d'assurance sans y être autorisé, sans acquitter les droits correspondants ou en prétendant qu'il n'a pas demandé les services qui lui sont débités.

Pour résoudre ce problème il a été proposé d'utiliser des clés d'accès que le client génère au moyen d'équipements périphériques. Ces solutions, outre leur coût, sont peu pratiques et longues à mettre en oeuvre. En fait, le problème posé ne peut être effectivement résolu que si on sait résoudre simultanément un autre problème : concevoir un procédé et un système commode d'utilisation, rapide à mettre en oeuvre et économique. En effet, dès lors que l'on s'adresse à un large public, la facilité d'utilisation et les gains de temps deviennent des problèmes majeurs qui ne peuvent pas être écartés.

Dans d'autres domaines, celui des cartes d'abonnés téléphoniques (document CA 2 085 775 au nom de Michel BOURRE), celui des jeux par téléphone (document FR-A-2 701 181 au nom de Lucas GORETA), celui des composeurs de numéros téléphoniques (document WO 96 04741 au nom de Andrew MARK) il a été proposé d'utiliser une carte émettant des signaux acoustiques, cryptés, de type DTMF. Ainsi, le porteur d'une telle carte, en accouplant celle-ci au microphone du combiné téléphonique, transfert automatiquement aux services informatiques ses identifiants.

Comme ces identifiants sont chiffrés, on peut penser qu'un tiers ne sera pas en mesure d'en comprendre le contenu. Toutefois, l'enregistrement des signaux émis par la carte reste possible et un fraudeur muni d'un tel enregistrement peut se substituer au bénéficiaire de la carte.

Les solutions proposées par M. BOURRE, L. GORETA et A. MARK, si elles étaient transposées aux prestations de services à distance proposées par les organismes financiers, ne permettraient donc pas d'empêcher un utilisateur mal intentionné d'accéder aux services offerts par la banque ou par la compagnie d'assurance sans y être autorisé.

La demande de brevet : DE,A,43 25 459 déposée au nom de Raymund H. EISELE décrit une calculette émettant des signaux acoustiques d'identification, variant à chaque opération. Un enregistrement de tels signaux acoustiques ne présenterait donc aucun intérêt pour un fraudeur. Toutefois, ses dimensions importantes, sa faible maniabilité, son mode d'emploi malaisé et son prix de revient élevé ne permettent pas d'atteindre les objectifs visés par la présente invention. A savoir : concevoir un procédé et un système commode d'utilisation, rapide à mettre en oeuvre et économique. En effet, un client d'une banque ou d'une compagnie d'assurance n'acceptera de faire appel aux services de ladite banque ou de ladite compagnie d'assurance que si l'accès à ceux-ci est facile et rapide

Les objectifs visés par la présente invention sont atteints et les problèmes que posent les techniques selon l'art antérieur sont résolus, selon l'invention, à l'aide d'un procédé comprenant les étapes suivantes :
- la banque ou la compagnie d'assurance met à la disposition de chacun de ses clients une carte, au format carte de crédit, personnalisée par des identifiants spécifiques pour chaque carte et chaque client,
- ladite carte émet de brefs signaux acoustiques d'identification, de type DTMF, cryptés au moins en partie, variant à chaque opération, lorsqu'elle est actionnée par le client de la banque ou de la compagnie d'assurance,
- lesdits signaux acoustiques d'identification sont reçus par le microphone et transmis par un réseau de communication au service informatique de la banque ou de la compagnie d'assurance.
- les signaux transmis et les données d'identification du client et de la carte détenues par le service informatique sont traités et comparés électroniquement par le service informatique de la banque ou de la compagnie d'assurance.

Ainsi, grâce à ce procédé, la banque ou la compagnie d'assurance peut vérifier que l'appelant dispose bien d'une carte authentique et non d'un leurre informatique. Par ailleurs, elle a pu identifier le titulaire de la carte comme étant une personne habilitée à utiliser les services qu'elle offre. De sorte qu'en cas de conformité, le client est immédiatement mis en communication avec le serveur vocal ou de la banque ou de la compagnie d'assurance. Par ailleurs, les fraudeurs n'ont plus la possibilité de dérober les données d'identification puisque celles-ci sont transmises sous une forme cryptée.

En outre, l'enregistrement, sous quelque forme que ce soit, des signaux acoustiques ne sera d'aucune utilité à un fraudeur pour se faire identifier par le service informatique de la banque ou de la compagnie d'assurance et bénéficier de leurs services En effet, les signaux acoustiques d'identification varient à chaque opération.

C'est à dire chaque fois que la carte est actionnée.

De préférence ladite carte :
- décompte en outre le nombre de fois C(p,n) où elle est actionnée,
- émet des signaux acoustiques représentatifs du nombre de fois C(p,n) où elle a été actionnée,
- crypte les signaux acoustiques en fonction du nombre de fois C(p,n) où elle a été actionnée.

De préférence également, lesdits moyens informatiques pour traiter et comparer électroniquement les signaux transmis et les données d'identification du client et de la carte détenues par le service informatique de la banque ou de la compagnie d'assurance,
- mémorisent le nombre de fois C(p,m) où la carte a été actionnée lors de la dernière opération validée,
- comparent le nombre de fois C(p,n) où la carte a été actionnée, lors de l'opération en cours, avec le nombre de fois mémorisé C(p,m),
- rejettent l'opération en cours si C(p,n) est inférieur ou égal à C(p,m) et poursuivent la vérification de l'opération en cours si C(p,n) est supérieur à C(p,m),
- recalculent les signaux électroniques S'(p,n) en fonction des données d'identification et du nombre de fois C(p,n) où la carte a été actionnée, lors de l'opération en cours, puis les comparent aux signaux électroniques S(p,n) transmis. De sorte qu'en cas de conformité, le client est immédiatement mis en communication avec le serveur vocal de la banque ou de la compagnie d'assurance.

On notera que l'utilisation d'un microcircuit pour crypter, au moyen d'un compteur, des codes d'identification échangés entre un émetteur et un récepteur a été décrite dans la demande de brevet : EP 0 459 781 A1 déposée au nom de NANOTEK LIMITED.

Afin d'augmenter la sécurité du procédé, dans une variante de réalisation, le procédé comprend en outre l'étape suivante : le client émet, au moyen d'un clavier associé au combiné téléphonique et/ou à la carte, un code confidentiel. Après transmission au service informatique de la banque ou de la compagnie d'assurance, par le réseau de communication, ce code confidentiel est traité et comparé au code confidentiel personnel du client détenu par le service informatique de la banque ou de la compagnie d'assurance. Ainsi, la banque ou la compagnie d'assurance peut vérifier que l'appelant est bien la personne habilitée à entrer en relation avec leurs services.

Une carte volée ne peut pas être utilisée par le voleur faute de connaître le code confidentiel.

Dans une autre variante de réalisation, afin de renforcer la sécurité du procédé et d'éviter que le client ne puisse pas contester l'ordre qu'il a passé à la banque ou à la compagnie d'assurance, le procédé comprend en outre les étapes suivantes :
- les ordres donnés par le client à la banque ou à la compagnie d'assurance sont validés par le client en actionnant la carte pour qu'elle émette un signal acoustique crypté de validation,
- le dit signal de validation est enregistré par le service informatique.

Avantageusement un accusé de réception est adressé au client.

Grâce à ce procédé, le client a validé, par une signature électronique, l'ordre qu'il a donné à la banque ou à la compagnie d'assurance.

L'invention concerne également un système permettant aux clients d'une banque ou d'une compagnie d'assurance, située à distance, d'accéder de manière sûre et rapide, aux services que la dite banque ou la dite compagnie d'assurance offre à ses clients. Ce système a pour caractéristique de comprendre les moyens de mise en oeuvre du procédé ci-dessus défini et de ses variantes de réalisation.

Plus particulièrement :
- Le système selon l'invention comprend une carte, au format carte de crédit, personnalisée par des identifiants spécifiques pour chaque carte et chaque client, mise à la disposition de ceux-ci par la banque ou la compagnie d'assurance. La carte comporte des moyens d'émission de brefs signaux acoustiques d'identification, de type DTMF. Ces signaux acoustiques sont émis lorsque le client de la banque ou de la compagnie d'assurance actionne les moyens d'émission au moyen d'un élément accessible de l'extérieur de la carte. La carte comporte en outre des moyens de cryptage permettant de crypter au moins en partie et de varier les signaux acoustiques chaque fois que la carte est actionnée.
- Le système selon l'invention comprend des moyens de transformation des signaux acoustiques, notamment un combiné téléphonique comportant un microphone, en des signaux électroniques transmissibles à distance au moyen d'un réseau de communication.
- Le système selon l'invention comprend des moyens informatiques, dépendants des services informatiques de la banque ou de la compagnie d'assurance, connectés au réseau de communication et situés à distance des moyens d'émission des signaux acoustiques.

Ces moyens informatiques comprennent eux-mêmes :
* une base de données contenant les références des cartes et des clients et leurs données d'identification,
* des moyens de traitement et des moyens de comparaison des signaux électroniques et des données d'identification contenues dans la base de données.

Ainsi, grâce à ce système, la banque ou la compagnie d'assurance, peut vérifier que l'appelant dispose bien d'une carte authentique et non d'un leurre informatique, par ailleurs elles ont pu identifier le titulaire de la carte comme étant une personne habilitée à utiliser les services qu'elles offrent. De sorte qu'en cas de conformité, le client est immédiatement mis en communication avec le serveur de la banque ou de la compagnie d'assurance. En outre, l'enregistrement, sous quelque forme que ce soit, des signaux acoustiques ne sera d'aucune utilité à un fraudeur pour se faire identifier par les services informatiques de la banque ou de la compagnie d'assurance et bénéficier de leurs services. En effet, les signaux acoustiques d'identification varient à chaque opération. C'est-à-dire chaque fois que la carte est actionnée.

De préférence la dite carte comporte en outre :
- un compteur incrémental interconnecté aux moyens d'émission et aux moyens de cryptage s'incrémentant d'au moins une unité chaque fois que la carte est actionnée.

De sorte que l'état du compteur incrémental est émis à destination des moyens informatiques et que les signaux acoustiques sont cryptés en fonction de l'état du compteur incrémental.

De préférence également les dits moyens informatiques comportent en outre :
- des moyens de mémorisation de l'état C(p,m) du compteur incrémental lors de la dernière opération validée,
- des moyens de comparaison de l'état C(p,n) du compteur incrémental émis lors de l'opération en cours avec l'état C(p,m) du compteur incrémental mémorisé.

De sorte que la vérification de l'opération en cours est rejetée si C(p,n) est inférieur ou égal à C(p,m) et est poursuivie si C(p,n) est strictement supérieur à C(p,m).

De préférence également les dits moyens de traitement et les dits moyens de comparaison des signaux électroniques et des données d'identification contenues dans la base de données comportent des moyens permettant de recalculer les signaux électroniques en fonction de l'état C(p,n) du compteur incrémental et des données d'identification puis de les comparer aux signaux électroniques transmis. De sorte qu'en cas de conformité, le client est immédiatement mis en communication avec le serveur vocal de la banque ou de la compagnie d'assurance.

Afin d'augmenter la sécurité du système, dans une variante de réalisation, le système comprend en outre des seconds moyens de comparaison d'un code confidentiel personnel au client contenu dans la base de données, à un code confidentiel émis par le client. Ce code est émis au moyen d'un clavier associé au combiné téléphonique et/ou à la carte et transmis aux moyens informatiques de la banque ou de la compagnie d'assurance, par le réseau de communication.

Ainsi, la banque ou la compagnie d'assurance peuvent vérifier que l'appelant est bien la personne habilitée à entrer en relation avec ses services. Une carte volée ne peut pas être utilisée par le voleur faute de connaître le code confidentiel.

Dans une autre variante de réalisation, afin également de renforcer la sécurité du système et d'éviter que le client ne puisse contester l'ordre qu'il a passé à la banque ou à la compagnie, le système est tel que :
- la carte émet, lorsqu'elle est actionnée par le client, un signal acoustique crypté de validation des ordres donnés par le client,
- les moyens informatiques comprennent des moyens de détection et d'enregistrement du signal de validation.

Grâce à ce système, le client a validé, par une signature électronique, l'ordre qu'il a donné à la banque ou à la compagnie d'assurance.

Avantageusement les moyens informatiques comprennent des moyens d'édition d'un accusé de réception des ordres donnés, destiné à être adressé au client.

D'autres caractéristiques et avantages de l'invention apparaîtront à la lecture de la description de variantes de réalisation de l'invention, données à titre d'exemple indicatif et non limitatif, et de :
- la figure 1 présentant une vue schématique en perspective du système et du procédé selon l'invention,
- la figure 2 présentant la carte sous la forme de bloc diagramme,
- la figure 3 présentant l'algorithme de vérification de l'authenticité du signal transmis.

Le système et le procédé selon l'invention permettent au client 11 disposant d'un combiné téléphonique 16 comportant un microphone 17, d'accéder de manière sûre et rapide, aux services 17 que la banque ou la compagnie d'assurance 12 offrent à leurs clients 11. Le combiné téléphonique 16, situé à distance des services informatiques 18 du prestataire de service 12, est connecté aux services informatiques via un réseau de communication 15.

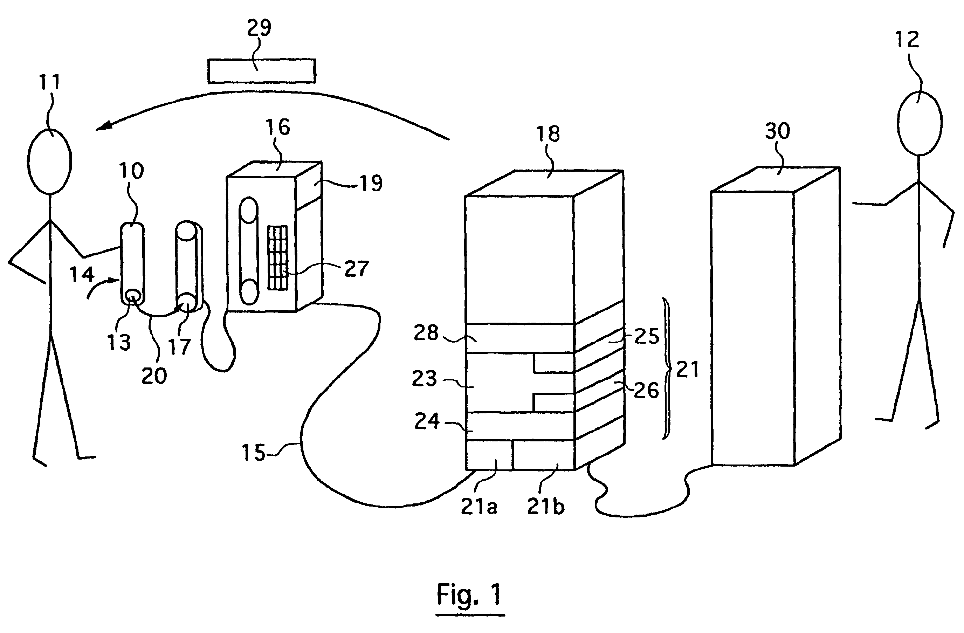

Le système comprend une carte 10, au format carte de crédit, personnalisée par des identifiants spécifiques pour chaque carte et pour chaque client 11. Cette carte est mise à la disposition des clients 11 par la banque ou la compagnie d'assurance. La carte 10 comporte des moyens d'émission, notamment un haut parleur 13, émettant de brefs signaux acoustiques d'identification 20, de type DTMF. Ces signaux sont émis lorsque les moyens d'émission 13 et les organes qui les contrôlent sont actionnés par le client au moyen d'un bouton 14 accessible de l'extérieur de la carte (non visible sur la figure 1 car situé sur l'autre côté de la carte). Ces moyens d'émission 13 sont excités par un générateur de signaux DTMF 99, contrôlé par un microprocesseur 104 alimenté par une pile 106 et piloté par un résonateur 107. Le microprocesseur 104 contenu dans la carte comporte des moyens de cryptage 103 permettant de crypter, au moins en partie, les signaux acoustiques 20, comportant un algorithme de cryptage 108 et des identifiants 109 spécifiques pour chaque carte 10 et pour chaque client 11, notamment la clé secrète 250 utilisée par algorithme de cryptage 108.

Les signaux acoustiques 20 sont reçus par le microphone 17 du combiné téléphonique, contre lequel le client accole la carte 10. Le système comprend également des moyens de transmission 19 des signaux acoustiques 20, situés dans le combiné téléphonique 16. Ces moyens de transmission 19 transmettent à distance les signaux acoustiques, après traitement et conversion en signaux électroniques, via le réseau de communication 15.

Le système comprend également des moyens informatiques 21, dépendants des services informatiques 18 de la banque ou de la compagnie d'assurance. Ces moyens informatiques sont connectés au réseau de communication 15 et situés à distance des combinés téléphoniques 16.

Ces moyens informatiques 21 comprennent eux-mêmes :
- une base de données 23 contenant les références des cartes et des clients et leurs données d'identification,
- des moyens de traitement 24 et des moyens de comparaison 25 des signaux électroniques et des données d'identification contenues dans la base de données.

De sorte qu'en cas de coïncidence, les services 30 de la banque ou de la compagnie d'assurance sont immédiatement accessibles au client 11.

De préférence, le microprocesseur 104 et les moyens de cryptage 103 sont conçus de telle sorte que le signal acoustique 20 varie à chaque opération. En effet, crypter un code d'identification c'est le transformer en une suite d'informations, incompréhensibles pour tout un chacun, et que seul le titulaire de la clef de cryptage pourra décrypter. Mais cela n'empêche absolument pas la copie du code d'identification crypté, soit au cours de sa transmission acoustique (magnétophone), soit par piratage de la ligne téléphonique. Cette copie utilisée indûment par un fraudeur, sera traitée par le système récepteur comme ayant toutes les caractéristiques de l'original, puis interprétée afin de vérifier les identifiants de la carte.

Le problème posé est donc le suivant : comment rendre impossible toute tentative de reproduction ? Il sera ci-après décrit différentes variantes de réalisation du moyen général qui permet de faire la distinction entre l'original et la copie, lors de l'analyse du signal crypté reçu par les moyens informatiques 21, en insérant un élément distinctif dans le signal 20 du type DTMF émis par la carte 10.

L'une de variantes consiste à utiliser une fonction dite d'horodatage (par exemple, ainsi qu'elle a été décrite dans le brevet US n° 4 998 279). Cette fonction d'horodatage exploite le paramètre "temps" qui évolue en permanence. La "copie" se trouve ainsi en retard, quand elle est émise. Une telle solution nécessite une synchronisation entre les moyens d'émission 13 et les moyens informatiques 21. Pour cela tous les deux doivent disposer d'une "base de temps" et d'un "étalon de fréquence". Ces deux bases de temps ont leur précision propre et leur dérive propre. Il en résulte qu'elles se désynchronisent lentement, mais progressivement. Pour remédier à cette difficulté technique, une certaine dérive est tolérée entre les bases de temps des moyens d'émission 13 et des moyens informatiques 21. Plus cette dérive est importante, plus l'incertitude augmente sur la "validité" de l'information reçue et plus augmente le risque de fraude. Ainsi si une dérive de une minute est tolérée, toute copie illicite de l'émission du signal crypté, et réutilisée frauduleusement dans les 30 secondes qui suivent, sera perçue comme valide par le système d'analyse des moyens informatiques 21.

Une autre variante consiste à utiliser des listes incrémentales (par exemple, ainsi qu'elle a été décrite dans le brevet US n° 4 928 098). Le dispositif d'émission et celui de réception possèdent la liste ordonnée des cryptages successifs du code d'identification ou bien disposent des algorithmes permettant de les établir au fur et à mesure. A un instant donné, les moyens informatiques 21 sont en attente du résultat crypté C(n). S'ils reçoivent effectivement le message C(n), il valide l'opération. Mais les moyens informatiques 21 peuvent recevoir un message différent, en effet l'utilisateur de la carte peut avoir actionné plusieurs fois les moyens d'émission 13 de celle-ci, par jeu, par maladresse, de sorte que la carte est dans la situation d'émettre le résultat crypté C(n+p) lors de sa prochaine utilisation avec les moyens informatiques 21. Si les moyens informatiques 21 reçoivent un message différent, ils cherchent en avant, dans la liste de résultats cryptés successifs, s'il existe un message C(n+p) identique à celui reçu. Pour lever l'ambiguïté "est-ce un message authentique émis par l'émetteur ?" ou "est-ce un message frauduleux ?", la solution consiste à demander ou à attendre l'émission suivante. Si celui-ci est alors identique à C(n+p+1), le système valide alors le message et se place dans l'attente de la prochaine émission, dans l'état C(n+p+2). Si celui-ci est différent, le message n'est pas validé et le système d'analyse reste en attente du message C(n). Une telle variante de réalisation n'est pas très ergonomique puisqu'elle oblige le titulaire de la carte à actionner plusieurs fois celle-ci.

Selon une variante de réalisation préférentielle, pour distinguer le signal original de sa copie, le microprocesseur 104 embarqué dans la carte 10 comporte un compteur incrémental 105. A chaque usage de la carte, le compteur incrémental 105 s'incrémente d'une ou de plusieurs unités. Bien évidemment, telle une roue à cliquet, celui-ci ne peut revenir en arrière, il ne peut qu'avancer à chaque usage.

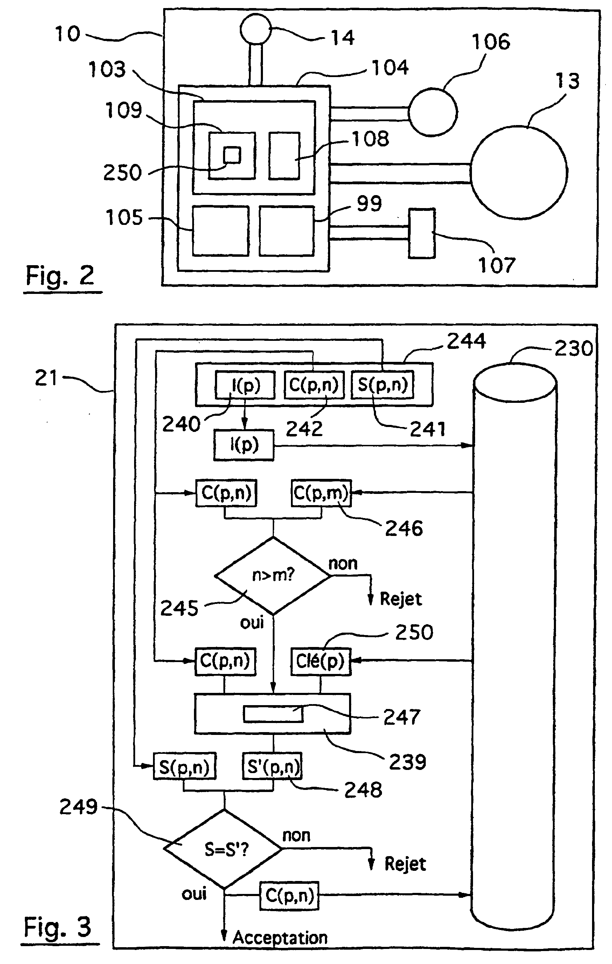

Dans le cas de cette variante de réalisation, l'état C(p,n) 242 du compteur 105 entre dans le calcul du message crypté 244 émis par les moyens d'émission 13. La partie codée S(p,n) 241 est calculée par l'algorithme 108 (dont l'équivalent 247 est mémorisé dans les moyens informatiques 21 au moyen de la clé secrète 250 spécifique à chaque carte et de l'état C(p,n) 242 du compteur 105. La carte 10 émet, en plus du numéro d'identification I(p) 240 de la carte et du code d'identification crypté S(p,n) 241, l'état C(p,n) 242 de son compteur incrémental 105 à chaque émission. Les moyens informatiques 21 mémorisent 230, dans la base de données 23, l'état C(p,n) 242 du compteur incrémental 105 lors de la dernière opération validée. Ainsi, à chaque réception de message 244, les moyens de comparaison 25 des moyens informatiques 21 peuvent comparer 245 l'information reçue relative à l'état C(p,n) 242 du compteur 105, à la précédente information reçue C(p,m) 246 et gardée en mémoire 230, 23.
a) - Si l'état C(p,n) 242 du compteur 105 (fig. 2) exprimé dans le message 244 est strictement supérieur (n > m) à celui C(p,m) 246 précédemment reçu, alors le message 244 est accepté et l'analyse se poursuit.
b)- Si l'état C(p,n) 242 du compteur 105 exprimé dans le message 244 est inférieur ou égal (n ≤ m) à celui C(p,m) 246 précédemment reçu, alors le message est refusé. Le message reçu ne peut être qu'une copie antérieurement effectuée ou un leurre informatique.

Si les conditions définies au point a) ci-dessus sont réunies, les moyens informatiques 21 permettent de lire la partie fixe I(p) 240 et de rechercher dans leur propre base de données 23, 230 la clé secrète correspondante de la carte. Les moyens de calcul 239 des moyens de traitement 24 peuvent alors au moyen l'algorithme 247, de l'état du compteur C(p,n) 242 et de la clé secrète Clé(p) 250, procéder au calcul du code crypté attendu par les moyens informatiques 21. Le code crypté S'(p,n) 248 ainsi calculé est comparé 249 à celui effectivement reçu S(p,n) 241, par les moyens de comparaison 25. Ce procédé et ces moyens permettent donc de valider ou d'invalider le message 244, sans qu'il soit nécessaire à l'utilisateur de la carte d'actionner plusieurs fois celle-ci, comme cela est le cas dans la variante de réalisation ci-dessus décrite.

L'existence au sein de la carte 10 d'un compteur incrémental 105 permet, sans coût supplémentaire, de fixer, au moment de la programmation individuelle de la carte, le nombre maximum de fois où la carte peut-être utilisée. Une fois ce maximum atteint, celle-ci n'émet plus de message cohérent et est donc refusée par les moyens informatiques 21.

La trame 244 émise contient, pour une carte donnée (p),
- une partie fixe I(p) 240 (le numéro d'identification de la carte),
- une partie variable incrémentale C(p,n) 242 (l'état du compteur),
- une partie variable S(p,n) 241 apparemment aléatoire (le résultat d'un algorithme de cryptage 108 sur la clé secrète 250 propre à cette carte (p))

La trame émise :
- est toujours différente d'une carte à l'autre,
- est, pour une carte donnée, toujours différente à chaque émission.

Les moyens informatiques 21 permettent, pour une carte donnée (p), de :
- lire la partie fixe I(p) 240 (le numéro d'identification de la carte),
- rechercher dans leur propre base de données 23 la clé secrète 250 de cette carte et le dernier enregistrement reçu de l'état C(p,m) 246 du compteur 105 de cette carte,
- rejeter cette trame 244 si l'état du compteur C(p,n) 242 de l'opération en cours est inférieur ou égal à celui C(p,m) 246 précédemment reçu et de poursuivre la vérification de l'opération en cours si l'état C(p,n) 242 est strictement supérieur à celui C(p,m) 246 précédemment reçu,
- de "décrypter" le message 244 reçu et d'en valider le contenu, en le recalculant au moyen de l'algorithme de cryptage 247, de la clé spécifique 250 de cette carte et de l'état du compteur C(p,n) 242, puis en comparant le résultat de ce calcul au message reçu.

Ainsi, grâce à cette combinaison de moyens il est possible d'émettre, au moyen d'une carte ayant le format d'une carte de crédit, des fréquences acoustiques de type DTMF d'identification, recevables par le microphone d'un équipement relié au réseau téléphonique, et d'avoir la certitude de l'authenticité de la carte appelante et d'écarter ainsi tous les fraudeurs utilisant tout enregistrement sonore ou informatique ou tout leurre informatique. De sorte qu'en cas de conformité, les services 30 de la banque ou de la compagnie d'assurance sont immédiatement accessibles aux clients 11.

Afin d'augmenter la sécurité du système, dans la variante de réalisation représentée sur la figure 1, le système comprend en outre des seconds moyens de comparaison 26. Ces moyens de comparaison permettent de comparer un code confidentiel personnel au client contenu dans la base de données avec le code confidentiel émis par l'utilisateur. Ce code est émis au moyen d'un clavier 27 associé au combiné téléphonique 16 et/ou à la carte 10 et transmis aux moyens informatiques 21 du prestataire, par le réseau de communication 15.

Ainsi, le prestataire de service a l'assurance que l'appelant 11 est bien la personne habilitée à entrer en relation avec ses services. Une carte volée ne peut pas être utilisée par le voleur faute de connaître le code confidentiel.

Dans une autre variante de réalisation, afin également de renforcer la sécurité du système et d'éviter que le client ne puisse contester l'ordre qu'il a adressé à la banque ou à la compagnie d'assurance, le système selon l'invention est tel que :
- la carte 10 émet, lorsqu'elle est actionnée 14 par le client un signal acoustique crypté de validation des ordres donnés par le client Il,
- les dits moyens informatiques 21 comprennent des moyens de détection 21 a et des moyens d'enregistrement 21b du signal de validation.

Grâce à ce système, le client a validé, par une signature électronique, l'ordre qu'il a donné à l'opérateur de télécommunication.

Avantageusement dans ce cas les moyens informatiques 21 comprennent en outre des moyens d'édition 28 d'un accusé de réception 29 des ordres donnés. Cet accusé de réception est adressé au client 11.

## Revendications

1. Procédé permettant aux clients (11) d'une banque ou d'une compagnie d'assurance (12), située à distance, d'accéder de manière sûre et rapide, au moyen d'un microphone (17) relié à un réseau de communication (15), aux services (30) que la dite banque (12) ou la dite compagnie d'assurance offre à ses clients(11), le dit procédé comprenant les étapes suivantes :
- la banque ou la compagnie d'assurance (12) met à la disposition de chacun de ses clients (11) une carte (10), au format carte de crédit, personnalisée par des identifiants spécifiques pour chaque carte et chaque client,
- la dite carte (10) émet de brefs signaux acoustiques d'identification (20), de type DTMF, cryptés au moins en partie, variant à chaque opération, lorsqu'elle est actionnée par le client (11) de la banque ou de la compagnie d'assurance (12),
- les dits signaux acoustiques sont reçus par le microphone (17) et transmis par le réseau de communication (15) au service informatique de la banque ou de la compagnie d'assurance (12),
- les signaux transmis et les données d'identification du client et de la carte détenues par le service informatique (18), sont traités (24) et comparés (25) électroniquement par le service informatique (18) de la banque ou de la compagnie d'assurance,
de sorte qu'en cas de coïncidence, le client (11).peut être immédiatement mis en communication avec les services (30) que la banque ou la compagnie d'assurance (12) offre à ses clients.

2. Procédé selon la revendication 1,
- la dite carte (10) :
* décompte (105) en outre le nombre de fois C(p,n) (242) où elle est actionnée par l'élément (14),
* émet des signaux acoustiques (20) représentatifs du nombre de fois C(p,n) (242) où elle a été actionnée,
* crypte (103) les signaux acoustiques en fonction du nombre de fois C(p,n) (242) où elle a été actionnée,
- les dits moyens informatiques (21), pour traiter (24) et comparer (25) électroniquement les signaux transmis et les données d'identification du client et de la carte détenues (23) par le service informatique (18) de la banque ou de la compagnie d'assurance (12),
* mémorisent (230) le nombre de fois C(p,m) (246) où la carte a été actionnée lors de dernière opération validée,
* comparent (245) le nombre de fois C(p,n) (242) où la carte a été actionnée, lors de l'opération en cours, avec le nombre de fois mémorisé C(p,m) (246),
* rejettent l'opération en cours si C(p,n) (242) est inférieur ou égal à C(p,m) (246) et poursuivent la vérification de l'opération en cours si C(p,n) (242) est supérieur à C(p,m) (246),
* recalculent (239) les signaux électroniques S'(p,n) (248) en fonction des données d'identification et du nombre de fois C(p,n) (242) où la carte a été actionnée, lors de l'opération en cours, puis les comparent (249) aux signaux électroniques transmis S(p,n) (241),
de sorte qu'en cas de coïncidence, le client (11).peut être immédiatement mis en communication avec les services (30) que la banque ou la dite compagnie d'assurance (12) offre à ses clients.

3. Procédé selon les revendications 1 ou 2, comprenant en outre l'étape suivante :
- le client émet, au moyen d'un clavier (27) associé au microphone (17) et/ou à la carte (10), un code confidentiel ; après transmission au service informatique (18) de la banque ou de la compagnie d'assurance, par le réseau de communication (15), ce code confidentiel est traité et comparé (26) au code confidentiel personnel du client détenu par le service informatique de la banque ou de la compagnie d'assurance.

4. Procédé selon les revendications 1, 2 ou 3, comprenant en outre l'étape suivante
- les ordres donnés par le client à la banque ou à la compagnie d'assurance sont validés par le client en actionnant (14) la carte (10) pour qu'elle émette un signal acoustique crypté de validation,
- le dit signal de validation est enregistré (21b) par le service informatique de (18) l'opérateur de la banque ou de la compagnie d'assurance.

5. Procédé selon la revendication 4, comprenant en outre l'étape suivante :
- un accusé de réception (29) du signal de validation est adressé au client (11) par la banque ou la compagnie d'assurance.

6. Système permettant aux clients (11) d'une banque ou d'une compagnie d'assurance (12), située à distance, d'accéder de manière sûre et rapide, aux services (30) que la dite banque ou la dite compagnie d'assurance offre à ses clients,
le dit système comprenant :
- une carte (10), au format carte de crédit, personnalisée par des identifiants spécifiques pour chaque carte et chaque client, mise à la disposition de ceux-ci ; la dite carte comportant :
* des moyens d'émission (13) de brefs signaux acoustiques d'identification (20), de type DTMF, actionnés par le client de la banque ou de la compagnie d'assurance au moyen d'un élément accessible (14) de l'extérieur de la carte (10),
* des moyens de cryptage permettant de crypter au moins en partie et de varier les signaux acoustiques chaque fois que la carte est actionnée,
- des moyens de transformation des signaux acoustiques, notamment un combiné téléphonique (16) comportant un microphone (17), en des signaux électroniques transmissibles (19) à distance au moyen d'un réseau de communication (15),
- des moyens informatiques (21), dépendants des services informatiques (18) de la banque ou de la compagnie d'assurance, connectés au réseau de communication (15) et situés à distance des moyens d'émission des signaux acoustiques, les dits moyens informatiques comprenant :
* une base de données (23) contenant les références des cartes et des clients et leurs données d'identification,
* des moyens de traitement (24) et des moyens de comparaison (25) des signaux électroniques et des données d'identification contenues dans la base de données, de sorte qu'en cas de coïncidence, les services de la banque ou de la compagnie d'assurance sont immédiatement accessibles aux clients.

7. Système selon la revendication 6,
- la dite carte (10) comportant en outre :
* un compteur incrémental (105) interconnecté aux moyens d'émission (13) et aux moyens de cryptage (103), s'incrémentant d'au moins une unité chaque fois que la carte (10) est actionnée par l'élément (14), de sorte que l'état du compteur incrémental (105) est émis à destination des moyens informatiques (21) et que les signaux acoustiques sont cryptés en fonction de l'état du compteur incrémental,
- les dits moyens informatiques (21) comportant en outre :
* des moyens de mémorisation (23, 230) de l'état C(p,m) (246) du compteur incrémental (105) lors de la dernière opération validée,
* des moyens de comparaison (245) de l'état C(p,n) (242) du compteur incrémental (105) émis lors de l'opération en cours avec l'état C(p,m) (246) du compteur incrémental mémorisé,
de sorte que la vérification de l'opération en cours est rejetée si C(p,n) (242) est inférieur ou égal à C(p,m) (246) et est poursuivie si C(p,n) (242) est strictement supérieur à C(p,m) (246),
- les dits moyens de traitement (24) et les dits moyens de comparaison (25) des signaux électroniques et des données d'identification contenues dans la base de données comportant des moyens permettant de recalculer (239) les signaux électroniques en fonction de l'état C(p,n) (242) du compteur incrémental (105) et des données d'identification puis de les comparer (249) aux signaux électroniques transmis, de sorte qu'en cas de coïncidence, les services de la banque ou de la compagnie d'assurance sont immédiatement accessibles aux clients.

8. Système selon la revendication 7, les dits moyens informatiques comprenant en outre:
- des seconds moyens de comparaison (26) d'un code confidentiel personnel au client contenu dans la base de données, à un code confidentiel émis par le client au moyen d'un clavier associé au combiné téléphonique et/ou à la carte et transmis aux moyens informatiques de la banque ou de la compagnie d'assurance, par le réseau de corcimunication (15).

9. Système selon les revendications 7 ou 8,
la dite carte (10) émettant en outre, lorsqu'elle est actionnée (14) par le client, un signal acoustique crypté de validation des ordres donnés par le client,
les dits moyens informatiques comprenant en outre :
- des moyens de détection (21a) et d'enregistrement (21b) du signal de validation.

10. Système selon la revendication 9, les dits moyens informatiques comprenant en outre :
- des moyens d'édition (28) d'un accusé de réception (29) des ordres donnés, destiné à être adressé au client.

## Claims

1. Method enabling customers (11) of a bank or insurance company (12) to securely and quickly access services (30) offered by the said bank (12) or insurance company to its customers (11), from a remote location using a microphone (17) connected to a communications network (15), the said process comprising the following steps:
- the bank or insurance company (12) provide each of their customers (11) with a card (10), the same size as a credit card, customized by identifiers specific to each card, and to each customer,
- the said card (10) emits short acoustic identification signals (20), of DTMF type, at least partly encrypted and varying for each operation, when the customer (11) of the bank or insurance company (12) uses it,
- the said acoustic signals are received by the microphone (17) and are transmitted through the communications network (15) to the computer service of the bank or insurance company (12),
- the transmitted signals and the customer and card identification data stored by the computer service (18) are processed (24) and electronically compared (25) by the bank or insurance company's computer service (18), so that, if the results are conform, the customer (11) may then immediately be connected to the services (30) offered by the bank or insurance company (12) to their customers.

2. Process according to claim 1
- the said card (10):
* also counts (105) the number of times C(p,n) (242) that it has been used by element (14),
* emits acoustic signals (20) representing the number of times C(p,n) (242) that it has been used,
* encrypts (103) acoustic signals as a function of the number of times C(p,n) (242) that it has been used.
- the said computer means (21) for processing (24) and electronically comparing (25) the transmitted signals and the customer and card identification data held (23) by the computer service (18) of the bank or insurance company (12),
* store (230) the number of times C(p,m) (246) that the card has been used at the time of the last validated operation,
* compare (245) the number of times C(p,n) (242) that the card has been used at the time of the current operation, with the memorized number of times C(p,m) (246),
* refuse the current operation if C(p,n) (242) is less than or equal to C(p,m) (246) and continue verifying the current operation if C(p,n) (242) is greater than C(p,m) (246),
* recalculate (239) the electronic signals S'(p,n) (248) as a function of identification data and the number of times C(p,n) (242) that the card was used, during the current operation, and then compare them (249) with the transmitted electronic signals S(p,n) (241), so that, if the results are conform, the customer (11) may then immediately be connected to the services (30) offered by the bank or insurance company (12) to their customers.

3. Process according to claim 1 or 2, also comprising the following step:
- the customer uses a keypad (27) associated with the microphone (17) and/or the card (10) to send a pin code; after transmission to the bank or insurance company's computer service (18) through the communications network (15), this pin code is processed and compared (26) with the customer's pin code held by the bank or insurance company's computer service.

4. Process according to claim 1, 2 or 3, also comprising the following steps:
- orders given by the customer to the bank or insurance company are validated by the customer by activating (14) the card (10) so that it emits an encrypted acoustic validation signal,
- the bank or insurance company's computer service (18) records (21b) the said validation signal.

5. Process according to claim 4, also comprising the following step:
- an acknowledgment (29) of the validation signal is addressed to the customer (11) by the bank or insurance company.

6. System enabling customers (11) of a bank or insurance company (12) to securely and quickly access services (30) offered by the said bank or the said insurance company to their customers, from a remote location, the said system comprising:
- a card (10), the same size as a credit card, customized by identifiers different for each card and for each customer, and provided to customers; the said card comprising:
* means (13) of emitting short acoustic identification signals, of DTMF type, activated by the customer using an element (14) accessible from the outside of the card (10),
* encryption means used to at least partly encrypt and vary acoustic signals each time the card is activated,
- means of transforming acoustic signal, notably a telephone handset (16) comprising a microphone (17) that will receive the acoustic signals and transform them into electronic signals that can be transmitted to the remote site (19) through a communications network (15),
- computer means (21) dependent on the computer services (18) belonging to the bank or insurance company (12), connected to the communications network (15) and remote from acoustic signal emission means, the said computer means (21) comprising:
* a database (23) containing the references of cards and customers and their identification data,
* processing means (24) and comparison means (25) operating on electronic signals and identification data contained in the database, such that if agreement is found, the customers can immediately be connected to the services of the bank or insurance company.

7. System according to claim 6,
- the said card (10) also comprising:
* an incremental counter (105) interconnected to emission means (13) and encryption means (103) that is incremented by at least one unit every time that the card (10) is activated by element (14), such that the state of the incremental counter (105) is sent to the computer means (21) and acoustic signals are encrypted as a function of the state of the incremental counter.
- The said computer means (21) also comprising:
* means of memorizing (23, 230) the state C(p,m) (246) of the incremental counter (105) at the time of the last validated operation,
* means for comparing (245) the state C(p,n) (242) of the incremental counter (105) emitted during the current operation with the state C(p,m) (246) of the memorized incremental counter,
such that the check on the current operation is refused if C(p,n) (242) is less than or equal to C(p,m) (246) and is continued if C(p,n) (242) is greater than C(p,m) (246)
- the said processing means (24) and the said means of comparison (25) of the electronic signals and identification data contained in the database including means of recalculating (239) the electronic signals as a function of the state C(p,n) (242) of the incremental counter (105) and the identification data, and then comparing (249) them with the transmitted electronic signals, so that, if the results are conform, the customers may then immediately be connected to the services offered by the bank or insurance company.

8. System according to claim 7, the said computer means also comprising:
- second means of comparing (26) a customer's pin code contained in the database, with a pin code emitted by the customer using a keypad (27) associated with the telephone handset and/or the card and transmitted to the bank or insurance company's computer means through the communications network.

9. System according to claim 7 or 8,
the said card (10) also emitting an encrypted acoustic signal validating the orders given by the customer, when activated (14) by the subscriber, the said computer means also comprising:
- means of detecting (21a) and recording (21b) the validation signal.

10. System according to claim 9, the said computer means also comprising:
- means of printing (28) an acknowledgment (29) of the orders given, which will be addressed to the customer.

## Patentansprüche

1. Verfahren zur Bereitstellung einer Telefonanrufsteuerungszentrale (30), die es den Abteilungen (41) verschiedener Dienstleister (40) ermöglicht, auf schnelle und sichere Weise die Kunden (11) der Dienstleister (40) zu identifizieren, die über einen Telefonapparat (16) oder jedes diese Funktion erfüllende Endgerät, welches an das Kommunikationsnetz (15) angeschlossen ist, anrufen,
**dadurch gekennzeichnet, dass** das genannte Verfahren folgende Schritte umfasst:
- die Abteilungen (41) des Dienstleisters (40) und/oder die Anrufsteuerungszentrale (30) stellen jedem einzelnen Kunden (11) eine Karte (10) im Kreditkartenformat zur Verfügung, die für jeden Kunden und für jede Karte personenbezogene Daten in Form von spezifischen ldentifizierungsmerkmalen enthalten,
- die genannte Karte (10) sendet, wenn sie vom Kunden aktiviert (14) wird, kurze akustische Identifikationssignale vom Typ DTMF aus, die wenigstens teilweise verschlüsselt (103) und bei jeder Operation unterschiedlich sind,
- die genannten akustischen ldentifikationssignale werden vom Mikrophon (17) des Telefonapparats (16) oder jedes diese Funktion erfüllenden Endgeräts empfangen und in elektronische Signale umgewandelt, bevor sie durch das Kommunikationsnetz (15) der Informatikabteilung (18) der Anrufsteuerungszentrale zugeleitet werden,
- die übermittelten Signale und die Identifikationsdaten des Kunden und der Karte, die bei der Informatikabteilung (18) vorliegen, werden von der Informatikabteilung (18) der Anrufsteuerungszentrale elektronisch verarbeitet (24) und verglichen (25), so dass der Kunde bei Übereinstimmung sofort mit dem an die Anrufsteuerungszentrale angeschlossenen Dienstleister verbunden werden kann.

2. Verfahren nach Anspruch 1, **dadurch gekennzeichnet, dass**
- die genannte Karte (10):
* außerdem die Anzahl Male C(p,n) (242), die sie durch das Element (14) aktiviert wird, abwärts zählt (105),
* akustische Signale (20) aussendet, die für die Anzahl Male C(p,n) (242), die sie aktiviert wurde, repräsentativ sind,
* die akustischen Signale entsprechend der Anzahl Male C(p,n) (242), die sie aktiviert wurde, die akustischen Signale verschlüsselt (103),
- die genannten Informatikmittel (21) zum Zweck der elektronischen Verarbeitung (24) und des elektronischen Vergleichs (25) der übermittelten Signale und der Identifikationsdaten des Kunden und der Karte, die bei der Informatikabteilung (18) der Anrufsteuerungszentrale vorliegen (23),
* die Anzahl Male C(p,m) (246), die die Karte während der letzten validierten Operation aktiviert wurde, speichern (230),
* die Anzahl Male C(p,n) (242), die die Karte während der laufenden Operation aktiviert wurde, mit der gespeicherten Anzahl Male C(p,m) (246) vergleichen (245),
* die laufende Operation zurückweisen, wenn C(p,n) (242) kleiner als oder gleich C(p,m) (246) ist, und die Überprüfung der laufenden Operation fortsetzen, wenn C(p,n) (242) größer ist als C(p,m) (246),
* die elektronischen Signale S'(p,n) (248) entsprechend den Identifikationsdaten und der Anzahl Male C(p,n) (242), die die Karte während der laufenden Operation aktiviert wurde, neu berechnen (239) und anschließend mit den übermittelten elektronischen Signalen S(p,n) (241) vergleichen (249), so dass der Kunde bei Übereinstimmung sofort mit dem an die Anrufsteuerungszentrale angeschlossenen Dienstleister verbunden werden kann.

3. Verfahren nach den Ansprüchen 1 oder 2, **dadurch gekennzeichnet, dass** es ferner folgenden Schritt umfasst:
- der Kunde sendet mittels einer dem Mikrophon und/oder der Karte zugeordneten Tastatur (27) einen Geheimcode aus; nach Übermittlung an die Informatikabteilung (18) der Anrufsteuerungszentrale über das Kommunikationsnetz (15) wird dieser Geheimcode verarbeitet und mit dem persönlichen Geheimcode des Kunden, der bei der Informatikabteilung (18) der Anrufsteuerungszentrale vorliegt, verglichen (26).

4. Verfahren nach den Ansprüchen 1, 2 oder 3, **dadurch gekennzeichnet, dass** es ferner folgenden Schritt umfasst:
- die dem Dienstleister vom Kunden erteilten Aufträge werden vom Kunden durch Aktivierung (14) der Karte (10) validiert, damit diese ein verschlüsseltes, akustisches Validierungssignal aussendet,
- das genannte Validierungssignal wird von der Anrufsteuerungszentrale (30) oder von den Abteilungen (41) des Dienstleisters (40) aufgezeichnet (21 b), so dass das Konto des Kunden (11) belastet oder mit einer Gutschrift versehen werden kann.

5. Verfahren nach Anspruch 4, **dadurch gekennzeichnet, dass** es ferner folgenden Schritt umfasst:
- eine Empfangsbestätigung (29) des Validierungssignals wird an den Kunden gerichtet.

6. System zur Bereitstellung einer Telefonanrufsteuerungszentrale (30), die es den Abteilungen (41) verschiedener Dienstleister (40) ermöglicht, auf schnelle und sichere Weise die Kunden (11) der Dienstleister (40) zu identifizieren, die über einen Telefonapparat (16) oder jedes diese Funktion erfüllende Endgerät, welches an das Kommunikationsnetz (15) angeschlossen ist, anrufen,
**dadurch gekennzeichnet, dass** das genannte System umfasst:
- eine Karte (10) im Kreditkartenformat, die durch die spezifischen Identifizierungsmerkmale jeder Karte und jedes Kunden, die diesen zur Verfügung gestellt werden, personalisiert ist, wobei die genannte Karte (10) Folgendes aufweist:
* Sendemittel (13) zum Aussenden kurzer akustischer Identifikationssignale vom Typ DTMF, aktiviert durch den Kunden mittels eines von außerhalb der Karte zugänglichen Elements (14),
* Verschlüsselungsmittel (103) zur wenigstens teilweisen Verschlüsselung und Veränderung der akustischen Signale, sobald die Karte (10) durch das Element (14) aktiviert wird,
- den genannten Telefonapparat (16) oder jedes diese Funktion erfüllende Endgerät, umfassend ein Mikrophon (17) für den Empfang und die Umwandlung der empfangenen akustischen Signale in elektronische Signale, die über das Kommunikationsnetz (15) fernübertragbar sind,
- Informatikmittel (21), die der Informatikabteilung (18) der Anrufsteuerungszentrale und/oder des Dienstleisters zugeordnet und mit dem Kommunikationsnetz verbunden sind, wobei die genannten Informatikmittel (21) Folgendes aufweisen:
* eine Datenbank (23), enthaltend die Referenzdaten der Karte, der Kunden und deren Identifikationsdaten,
* Mittel zur Verarbeitung (24) und Mittel zum Vergleich (25) der elektronischen Signale und der in der Datenbank enthaltenen Identifikationsdaten,
so dass der Kunde bei Übereinstimmung sofort mit dem an die Anrufsteuerungszentrale angeschlossenen Dienstleister verbunden werden kann.

7. System nach Anspruch 6,
- **dadurch gekennzeichnet, dass** die genannte Karte (10) ferner umfasst:
* einen Inkrementalzähler (105), der mit den Sendemittein (13) und den Verschlüsselungsmitteln (103) zusammengeschaltet ist und bei Aktivierung durch das Element (14) die Karte (10) jeweils um eine Einheit weiterschaltet, so dass der Zustand des Inkrementalzählers (105) an die Informatikmittel (21) gesendet wird und die akustischen Signale je nach Zustand des Inkrementalzählers verschlüsselt werden,
- dass die genannten Informatikmittel (21) ferner umfassen:
* Mittel zur Speicherung (23, 230) des Zustands C(p,m) (246) des Inkrementalzählers (105) während der letzten validierten Operation,
* Mittel zum Vergleich (245) des Zustands C(p,n) (242) des Inkrementalzählers (105), der bei der laufenden Operation mit dem Zustand C(p,m) (246) des gespeicherten Inkrementalzählers ausgesandt wird, so dass die Überprüfung der laufenden Operation zurückgewiesen wird, wenn C(p,n) (242) kleiner als oder gleich C(p,m) (246) ist, und fortgesetzt wird, wenn C(p,n) (242) jedenfalls größer ist als C(p,m) (246),
- dass die genannten Mittel zur Verarbeitung (24) und die genannten Mittel zum Vergleich (25) der elektronischen Signale und der in der Datenbank enthaltenen Identifikationsdaten Mittel aufweisen, die eine Neuberechnung (239) der elektronischen Signale je nach Zustand C(p,n) (242) des Inkrementalzählers (105) und der Identifikationsdaten und den anschließenden Vergleich (249) mit den übermittelten elektronischen Signalen erlauben, so dass der Kunde bei Übereinstimmung sofort mit dem an die Anrufsteuerungszentrale angeschlossenen Dienstleister verbunden werden kann.

8. System nach den Ansprüchen 6 oder 7, **dadurch gekennzeichnet, dass** die genannten Informatikmittel (21) ferner zweite Mittel zum Vergleich (26) eines in der Datenbank enthaltenen personenbezogenen Kunden-Geheimcodes mit einem Geheimcode aufweisen, der vom Kunden mittels einer dem Telefonapparat (oder jedem diese Funktion erfüllenden Endgerät) und/oder der Karte zugeordneten Tastatur gesendet und an die Informatikmittel der Anrufsteuerungszentrale über das Kommunikationsnetz (15) übermittelt wird.

9. System nach den Ansprüchen 6, 7 oder 8, **dadurch gekennzeichnet,**
**dass** die genannte Karte (10) bei Aktivierung (14) durch den Kunden (11) ferner ein verschlüsseltes, akustisches Validierungssignal der vom Kunden erteilten Aufträge aussendet, wobei die Anrufsteuerungszentrale (30) oder die Abteilungen (41) des Dienstleisters (40) außerdem aufweisen:
- Mittel zur Erfassung (21a) und Aufzeichnung (21b) des Validierungssignals.

10. System nach Anspruch 9, **dadurch gekennzeichnet, dass** die genannten Mittel zur Erfassung (21a) und Aufzeichnung (21b) des Validierungssignals mit Mitteln zur Ausgabe (28) einer Empfangsbestätigung (29) der erteilten Aufträge, die dem Kunden zugesandt wird, verbunden sind.
